Europäisches Patentamt

European Patent Office

Office européen des brevets

(11) Veröffentlichungsnummer : **0 119 475 B1**

# EUROPÄISCHE PATENTSCHRIFT

(45) Veröffentlichungstag der Patentschrift : **12.11.86**

(51) Int. Cl.⁴ : **C 04 B 35/52**

(21) Anmeldenummer : **84101605.8**

(22) Anmeldetag : **16.02.84**

(54) Verfahren zur Herstellung poröser, durchströmbarer Formkörper aus Kohlenstoff.

(30) Priorität : **18.02.83 DE 3305530**

(43) Veröffentlichungstag der Anmeldung :
**26.09.84 Patentblatt 84/39**

(45) Bekanntmachung des Hinweises auf die Patenterteilung : **12.11.86 Patentblatt 86/46**

(84) Benannte Vertragsstaaten :
**BE CH FR GB LI NL SE**

(56) Entgegenhaltungen :
**DE-A- 2 039 593**
**DE-B- 2 133 044**
**FR-A- 1 374 320**
**FR-A- 1 488 898**
**FR-A- 2 104 237**
**FR-A- 2 384 730**
**GB-A- 1 248 507**
**US-A- 2 645 583**
**US-A- 4 009 143**
**US-A- 4 023 979**

(73) Patentinhaber : **Kernforschungsanlage Jülich Gesellschaft mit beschränkter Haftung**
**Postfach 1913**
**D-5170 Jülich 1 (DE)**

(72) Erfinder : **Dias, Francisco Joachim**
**Neuburgerstrasse 15**
**D-5170 Jülich (DE)**
Erfinder : **Kampel, Marian**
**Belderweg 9**
**D-5138 Heinsberg-Oberbruch (DE)**
Erfinder : **Luhleich, Hartmut, Dr.**
**Chlodwigplatz 15**
**D-5160 Düren (DE)**

## Beschreibung

Die Erfindung bezieht sich auf ein Verfahren zur Herstellung poröser, durchströmbarer Formkörper aus Kohlenstoff.

Ein Verfahren zur Herstellung poröser Formkörper aus Kohlenstoff ist aus der DE-PS 2 133 044 bekannt. Derartige Formkörper zeichnen sich durch eine hohe Temperatur und Temperaturwechselbeständigkeit aus. Gegenüber Metallen ist auch die geringe Dichte dieser Kohlenstoffkörper hervorzuheben.

Zwar besitzen die bekannten Formkörper auch eine durchgehende Porösität, die den Durchtritt eines Mediums durch den Formkörper zuläßt. Zur Verwendung als durchströmbarer Formkörper, beispielsweise als Heißgasfilter, Durchströmungselektrode, Katalysatorträger o. dgl., sind die nach dem bekannten Verfahren hergestellten Formkörper jedoch nicht geeignet. Denn in diesen Anwendungsfällen muß die durchströmende Gas- oder Flüssigkeitsmenge groß sein, was mit den bekannten Formkörpern nicht erzielbar ist, da die Poren nur eine Größenordnung bis zu etwa 100 Mikrometer aufweisen.

Aufgabe der Erfindung ist es, ein Verfahren zu schaffen, das es ermöglicht, poröse Formkörper aus Kohlenstoff herzustellen, die das Durchströmen einer genügend großen Gas- oder Flüssigkeitsmenge erlauben, so daß derartige Formkörper als Heißgasfilter, Durchströmungselektroden, Katalysatorträger u. dgl. eingesetzt werden können.

Die der Erfindung zugrunde liegende Aufgabe wird dadurch gelöst, daß ein aus Kohlenstoffpulver und verkokbarem organischem Binder gebildetes Mischpulver zu einem grünen Vorkörper geformt wird, worauf der Vorkörper in nach Möglichkeit grobe Körner zerkleinert und aus dem so erhaltenen körnigen Material eine in Abhängigkeit von der vorgesehenen Durchlässigkeit des zu bildenden durchströmbaren Formkörpers im Bereich zwischen 0,2 bis 10 mm liegende Kornfraktion herausgesiebt wird, wonach aus der Kornfraktion ein zweiter Grünkörper geformt wird, wobei der hierbei angewendete Preßdruck um so geringer ist, je größer die gewünschte Durchlässigkeit des zu bildenden Formkörpers ist, worauf der Grünkörper zur Bildung des porösen, durchströmbaren Formkörpers im Vakuum oder in Inertgasatmosphäre bis zu einer Temperatur im Bereich zwischen 600 bis 1 000 °C verkokt wird.

Die Mischung des Kohlenstoffpulvers mit dem verkokbaren Binder kann mittels Knetern oder Mischern erfolgen. Besonders vorteilhaft ist es jedoch, wenn bei der Herstellung des Mischpulvers gemäß den aus den deutschen Patentschriften 20 40 252 und 21 32 492 bekannten Verfahren vorgegangen wird. Denn dadurch ist gewährleistet, daß schon der Vorkörper eine vergleichsweise hohe Porösität und eine relativ große Festigkeit aufweist.

Es ist daher zweckmäßig, daß zur Herstellung des Mischpulvers, das aus Pech, Teer, Kunstharz o. dgl. bestehende Bindemittel zunächst in einer Flüssigkeit, in der zuvor das aus gemahlenem Koks, Elektrographit, Naturgraphit, Kohle aus Holz oder anderen Zellstoffen und/oder aus Ruß bestehende Kohlenstoffpulver aufgeschlämmt worden war, ganz oder zum Teil gelöst, und die Lösung sodann in eine Flüssigkeit, mit der das Lösungsmittel mischbar, in der das Bindemittel jedoch nicht oder nur schwer löslich ist, wie Wasser, eingegeben wird, worauf die mit dem Bindemittel überzogenen und sich abgesetzten und dadurch eine schlammige Masse bildenden Kohlenstoffkörner durch Dekantieren von der überstehenden Flüssigkeit befreit und anschließend getrocknet werden.

Die Herstellung des grünen Vorkörpers aus dem Mischpulver geschieht nach bekannten Verfahren wie Gesenk- oder Strangpressen, Schlickern oder ähnlichen Verfahren. Dabei ist es jedoch ferner von Vorteil, daß gemäß der aus der DE-PS 2 133 044 bekannten Verfahrensweise der Schlamm zunächst getrocknet, das dabei gebildete Pulver in die für die Formgebung vorgesehene Form gebracht, anschließend den Dämpfen von Flüssigkeiten, in denen das Bindemittel ganz oder teilweise löslich ist, ausgesetzt und im Anschluß daran getrocknet und in an sich bekannter Weise verkokt wird. Dabei beträgt der Anteil des Bindemittels in dem verwendeten Schlamm zweckmäßigerweise mehr als 25 Gew.%.

Auch zur Bildung des zweiten Grünkörpers ist es von Vorteil, die aus der DE-PS 2 133 044 bekannte Verfahrensweise entsprechend anzuwenden. Hierzu wird die als Ausgangsprodukt für den zweiten Grünkörper vorgesehene Kornfraktion in die für die Formgebung vorgesehene Form gebracht, anschließend den Dämpfen von Flüssigkeiten, in denen das Bindemittel ganz oder teilweise löslich ist, ausgesetzt und im Anschluß daran getrocknet.

Die Zerkleinerung des grünen Vorkörpers erfolgt zweckmäßigerweise mittels eines Backenbrechers, der so eingestellt wird, daß eine Hauptkornfraktion entsprechend der gewünschten Durchlässigkeit des Endkörpers entsteht. Je größer der Gas- bzw. Flüssigkeitsdurchsatz des Endkörpers sein soll, um so größer wird die Korngröße gewählt, was insbesondere durch entsprechende Auswahl der Siebfraktion geschieht. Aus einem solchen, aus relativ einheitlicher Körnung bestehenden Pulver wird zweckmäßigerweise mittels Gesenkpressen erneut ein Grünkörper hergestellt, wobei bei gleicher Körnung die Durchlässigkeit des Endkörpers um so größer ist, je geringer der Preßdruck ist.

Bei dieser Verfahrensstufe wirkt sich die Anwendung der aus den DE-PS 2 040 252 und 2 132 492 bekannten Verfahren zur Herstellung des Mischpulvers auch insofern günstig aus, als infolge des gleichmäßigen Überzugs der Pulverkörner mit der Binderhaut die bei der Herstellung des zweiten Grünkörpers benötigten Preßdrucke sehr niedrig sein können, und trotzdem Körper gebildet werden, deren Festigkeit vergleichweise hoch ist.

Der nach Zerkleinern des Vorkörpers und aus der dabei gewonnenen Kornfraktion gebildete zweite Formkörper besteht aus einem Granulat von Körnern und weist ebenso wie der verkokte Endkörper relativ große Poren auf.

Für den Fall, daß der poröse, durchströmbare Formkörper bei seiner Verwendung auf höhere Temperaturen als die Verkokungstemperatur erhitzt werden soll, wird an die Verkokung noch eine Temperaturbehandlung angeschlossen, bei der der Formkörper im Vakuum oder in Inertgasatmosphäre auf eine Temperatur erhitzt wird, die mindestens der Anwendungstemperatur entspricht, nach Möglichkeit aber höher als diese liegen soll.

## 1. Ausführungsbeispiel

900 g eines Elektrographitpulvers (Hauptkorngröße 60 $\mu$m-80 $\mu$m), dessen Körner mit einem Phenolformaldehydharzbinder gemäß dem aus der DE-PS 2 040 252 bekannten Verfahren gleichmäßig umhüllt worden waren (Binderanteil 30 Gew.%), wurden in einen Formkasten eingefüllt und ein Stempel aufgesetzt. Dieser Formkasten wurde dann in einen auf 110 °C vorgeheizten Trockenschrank gebracht und 2 Stunden dort belassen. Danach wurde die erwärmte Pulvermasse mit einem Druck von 1 bar zu einem grünen Vorkörper verpreßt und nach dem Erkalten entformt. Der Formkörper hatte die Maße 98 mm × 98 mm × 94 mm und eine geometrische Dichte von 1,00 g/cm³.

Der grüne Vorkörper wurde nun zunächst grob gebrochen und dann mittels eines Backenbrechers weiter zerkleinert. Aus dem erhaltenen Korngemisch wurden verschiedene Fraktionen herausgesiebt.

40 g Granulat der Körnung 1,4 mm bis 2 mm wurden in einem rechteckigen Formkasten mit einer Grundfläche von 70 mm × 80 mm gleichmäßig eingefüllt und mit einem Stempel beschwert, dessen Masse so bemessen war, daß ein Druck von 50 mbar auf die Granulatmenge ausgeübt wurde. Der auf diese Weise hergerichtete Formkasten wurde anschließend 2 Stunden lang in einen auf 140 °C vorgewärmten Trockenschrank gestellt und aufgeheizt. Danach wurde der Formkasten wieder herausgenommen und nach dem Erkalten entformt. Der Grünkörper in Form einer Granulatplatte wurde anschließend in Argonatmosphäre durch Erhitzen auf 800 °C verkokt. Der gebildete Formkörper hatte danach die Abmessungen 76 mm × 66 mm × 9,5 mm und eine Luftdurchlässigkeit von 1,20 l/cm² min (20 mm WS).

## 2. Ausführungsbeispiel

Ein nach Ausführungsbeispiel 1 hergestelltes Granulat der Siebfraktion 1,4 mm-2 mm wurde in gleicher Weise wie in Ausführungsbeispiel 1 beschrieben eingefüllt und erwärmt, wobei es jetzt jedoch mit einem Stempel größerer Masse beschwert wurde, so daß der Preßdruck 100 mbar betrug. Nach dem Erkalten und Entformen erhält man als Grünkörper eine dünnere Platte als unter den Bedingungen des Ausführungsbeispiels 1. Nach dem Verkoken hatte der Formkörper die Abmessungen 76 mm × 66 mm × 8,5 mm und eine Luftdurchlässigkeit von 0,57 l/cm² min (20 mm WS).

## 3. Ausführungsbeispiel

Ein nach Ausführungsbeispiel 1 hergestelltes Granulat einer Siebfraktion von 0,9 mm bis 1,4 mm wurde entsprechend Ausführungsbeispiel 2 mit einem Druck von 100 mbar verpreßt und der gebildete Grünkörper anschließend verkokt. Der so hergestellte Formkörper hatte die Maße 76 mm × 66 mm × 9 mm und eine Luftdurchlässigkeit von 0,22 l/cm² min (20 mm WS).

## 4. Ausführungsbeispiel

Elektrographitpulver entsprechend Ausführungsbeispiel 1, dessen Pulverkörner mit einem Phenolformaldehydharzbinder überzogen worden waren, wurden in einen Formkasten eingefüllt. Dieser hatte Löcher von 4 mm Durchmesser und wurde vor dem Einfüllen des Pulvers mit 2 Lagen Filterpapier ausgelegt. Nach dem gleichmäßigen Einfüllen des beschichteten Pulvers wurde dieses mit einem Filterpapier bedeckt und ein ebenfalls durchlöcherter Stempel aufgesetzt, dessen Masse so gewählt wurde, daß er einen Druck von 100 mbar ausübte. Der so vorbereitete Formkasten wurde in einen auf 70 °C vorgeheizten Vakuumtrockenschrank gestellt, der auf etwa 0,5 mbar Druck evakuiert wurde. Danach wurde bis zu einem Druck von 600 mbar Methanoldampf in den Trockenschrank eingeleitet, nach einer halben Stunde zunächst wieder evakuiert und dann belüftet. Nach dem Abkühlen wurde der grüne Vorkörper entformt und dann daraus — wie in Ausführungsbeispiel 1 beschrieben — ein gas- und flüssigkeitsdurchlässiger Formkörper aus Kohlenstoff hergestellt. Luftdurchlässigkeit : 0,8 l/cm² (bei 20 mm WS).

## 5. Ausführungsbeispiel

980 g eines Elektrographitpulvers (Hauptkorngröße 60 $\mu$m bis 80 $\mu$m) wurden mit einer 30 Gew.%-igen alkoholischen Lösung gleichmäßig vermischt, in der 420 g eines Phenolformaldehydharzbinders gelöst waren. Anschließend wurde die Masse in einem Trockenschrank durch Ausdampfen des Alkohols getrocknet und aufgemahlen. Das so erhaltene Pulver wurde in einen Formkasten eingefüllt, in einem Trockenschrank auf 110 °C aufgeheizt und dann mit einem Druck von 8 bar verpreßt und nach dem Erkalten entformt. Der Formkörper hatte die Maße 98 mm × 98 mm × 121 mm und eine geometrische Dichte von 1,2.

Ausgehend von dem so gebildeten Vorkörper wurde — wie in Ausführungsbeispiel 1 beschrieben — ein zweiter Grünkörper und hieraus durch Verkoken der durchströmbare Formkörper hergestellt. Die Luftdurchlässigkeit dieses Formkörpers betrug — bei 20 mm WS — 0,7 l/cm² min.

**Patentansprüche**

1. Verfahren zur Herstellung poröser durchströmbarer Formkörper aus Kohlenstoff, dadurch gekennzeichnet, daß ein aus Kohlenstoffpulver und verkokbarem organischem Binder gebildetes Mischpulver zu einem grünen Vorkörper geformt wird, worauf der Vorkörper in nach Möglichkeit grobe Körner zerkleinert und aus dem so erhaltenen körnigen Material eine in Abhängigkeit von der vorgesehenen Durchlässigkeit des zu bildenden, durchströmbaren Formkörpers im Bereich zwischen 0,2 bis 10 mm liegende Kornfraktion herausgesiebt wird, wonach aus der Kornfraktion ein zweiter Grünkörper geformt wird, wobei der hierbei angewendete Preßdruck um so geringer ist, je größer die gewünschte Durchlässigkeit des zu bildenden Formkörpers ist, worauf der zweite Grünkörper zur Bildung des porösen durchströmbaren Formkörpers im Vakuum oder in Inertgasatmosphäre bis zu einer Temperatur im Bereich zwischen 600 bis 1 000 °C verkokt wird.

2. Verfahren nach Anspruch 1, dadurch gekennzeichnet, daß zur Herstellung des Mischpulvers das aus Pech, Teer, Kunstharz o. dgl. bestehende Bindemittel zunächst in einer Flüssigkeit, in der zuvor das aus gemahlenem Koks, Elektrographit, Naturgraphit, Kohle aus Holz oder anderen Zellstoffen und/oder aus Ruß bestehende Kohlenstoffpulver aufgeschlämmt worden war, ganz oder zum Teil gelöst und die Lösung sodann in eine Flüssigkeit, mit der das Lösungsmittel mischbar, in der das Bindemittel jedoch nicht oder nur schwer löslich ist, wie Wasser, eingegeben wird, worauf die mit dem Bindemittel überzogenen und sich abgesetzten und dadurch eine schlammige Masse bildenden Kohlenstoffkörner durch Dekantieren von der überstehenden Flüssigkeit befreit und anschliessend getrocknet werden.

3. Verfahren nach Anspruch 2, dadurch gekennzeichnet, daß die Aufschlämmung in einer Mischkammer mittels einer Mischdüse in die Trägerflüssigkeit so eingespritzt wird, daß die Kohlenstoffkörner mit dem Bindemittel gleichmäßig überzogen werden.

4. Verfahren nach Anspruch 2 oder 3, dadurch gekennzeichnet, daß zur Bildung des grünen Vorkörpers der Schlamm zunächst getrocknet, das dabei gebildete Pulver in die für die Formgebung vorgesehene Form gebracht, anschließend den Dämpfen von Flüssigkeiten, in denen das Bindemittel ganz oder teilweise löslich ist, ausgesetzt und im Anschluß daran getrocknet wird.

5. Verfahren nach einem der Ansprüche 2 bis 4, dadurch gekennzeichnet, daß der Anteil des Bindemittels in dem verwendeten Schlamm mehr als 25 Gew.% beträgt.

6. Verfahren nach einem der Ansprüche 1 bis 5, dadurch gekennzeichnet, daß zur Bildung des zweiten Grünkörpers die Kornfraktion in die für die Formgebung vorgesehene Form gebracht, anschließend den Dämpfen von Flüssigkeiten, in denen das Bindemittel ganz oder teilweise löslich ist, ausgesetzt und im Anschluß daran getrocknet wird.

7. Verfahren nach einem der Ansprüche 1 bis 6, dadurch gekennzeichnet, daß für den Fall, daß der poröse, durchströmbare Formkörper bei seiner Verwendung auf höhere Temperaturen als die Verkokungstemperatur erhitzt wird, an die Verkokung noch eine Hochtemperaturbehandlung angeschlossen wird, bei der der Formkörper im Vakuum oder in Inertgasatmosphäre auf eine Temperatur erhitzt wird, die mindestens der Anwendungstemperatur entspricht.

**Claims**

1. Method of producing porous flow-through shaped carbon bodies, characterised in that a mixed powder formed of carbon powder and cokable organic binder is shaped to form a green preliminary body, whereupon the preliminary body is comminuted into as far as possible coarse grains, and from the granular material thus obtained there is screened out a grain fraction in the range between 0.2 to 10 mm in dependence on the proposed permeability of the flow-through shaped body to be formed, whereupon a second green body is shaped from the grain fraction, the moulding pressure used here being smaller in proportion as the desired permeability of the shaped body to be formed is greater, whereupon the second green body is coked under vacuum or in an inert gas atmosphere to a temperature in the range between 600 to 1 000 °C to form the porous flow-through shaped body.

2. Method according to claim 1, characterised in that, to produce the mixed powder, the binder consisting of pitch, tar, synthetic resin or the like is first of all wholly or partly dissolved in a liquid in which previously the carbon powder consisting of ground coke, electrographite, natural graphite, carbon from wood or from other celluloses, and/or soot, has been put in suspension, and the solution is then introduced into a liquid with which the solvent is mixable but in which the binder is not soluble or is only difficultly soluble, such as water, whereupon the carbon grains coated with binder, and settled, and thus forming a sludgy mass are freed from the superjacent liquid by decantation and then dried.

3. Method according to claim 2, characterised in that the suspension is so sprayed into the carrier liquid in a mixing chamber by means of a mixing nozzle that the carbon grains are uniformly coated with the binder.

4. Method according to claim 2 or 3, characterised in that for forming the green preliminary body the sludge is first dried, the powder thus formed is put into the mould intended for shaping, then subjected to the action of the vapours of liquids in which the binder is wholly or partly soluble, and is then dried.

5. Method according to one of claims 2 to 4, characterised in that the proportion of binder in the sludge used amounts to more than 25 % by weight.

6. Method according to one of claims 1 to 5, characterised in that for forming the second green body the grain fraction is put into the mould intended for shaping, then is subjected to the action of the vapours of liquids wherein the binder is wholly or partly soluble, and is then dried.

7. Method according to one of claims 1 to 6, characterised in that in cases where the porous flow-through shaped body when in use is heated to higher temperatures than the coking temperature, the coking will further be followed by a high-temperature treatment wherein the shaped body is heated under vacuum or in an inert gas atmosphere to a temperature which corresponds at least to the temperature occurring in use.

## Revendications

1. Procédé de fabrication de corps moulés, poreux et susceptibles d'être traversés par un fluide, en carbone, caractérisé en ce qu'il consiste à mouler, en une ébauche à vert, un mélange de poudres constitué de poudre de carbone et d'un liant organique cokéfiable, puis à fragmenter l'ébauche, autant que possible en grains grossiers, et à extraire, par tamisage du matériau en grains obtenu, une fraction granulométrique comprise, en fonction de la perméabilité prévue du corps moulé à former, entre 0,2 et 10 mm, à mouler un second corps à vert en la fraction granulométrique, la pression d'application utilisée étant d'autant plus petite que la perméabilité souhaitée pour le corps moulé à former est plus grande, puis à cokéfier le second corps à vert dans une atmosphère de gaz inerte ou sous vide par chauffage à une température de l'ordre de 600 °C à 1 000 °C.

2. Procédé suivant la revendication 1, caractérisé en ce qu'il consiste, pour préparer le mélange de poudres, à dissoudre en tout ou partie le liant constitué de poix, de goudron, de résine synthétique ou de produits similaires, d'abord dans un liquide dans lequel on a mis au préalable en suspension la poudre de carbone constituée de coke broyé, d'électrographite, de graphite naturel, de charbon de bois ou d'autres substances cellulosiques et/ou de la suie, et à verser immédiatement la solution dans un liquide avec lequel le solvant est miscible, mais dans lequel le liant n'est pas soluble ou ne l'est que peu, comme de l'eau, puis à débarrasser, par décantation, du liquide surnageant les grains ou les particules enrobés du liant et se déposant en formant une masse boueuse, et ensuite à les sécher.

3. Procédé suivant la revendication 2, caractérisé en ce qu'il consiste à projeter la suspension dans le liquide porteur, dans une chambre de mélange au moyen d'une buse de mélange, de manière que les grains soient enrobés de liant d'une manière uniforme.

4. Procédé suivant la revendication 2 ou 3, caractérisé en ce qu'il consiste, pour former l'ébauche à vert, à sécher d'abord la boue, à mettre la poudre ainsi formée dans le moule prévu pour le façonnage, à la soumettre ensuite aux vapeurs de liquides dans lesquels le liant est entièrement ou partiellement soluble, et ensuite à la sécher.

5. Procédé suivant l'une des revendications 2 à 4, caractérisé en ce que la proportion du liant dans la boue utilisée représente plus de 25 % en poids.

6. Procédé suivant l'une des revendications 1 à 5, caractérisé en ce qu'il consiste, pour former le second corps à vert, à mettre la fraction granulométrique dans le moule prévu pour le façonnage, ensuite à la soumettre à la vapeur de liquides dans lesquels le liant est partiellement ou entièrement soluble, et ensuite à la sécher.

7. Procédé suivant l'une des revendications 1 à 6, caractérisé en ce que, dans le cas où le corps moulé, poreux et susceptible d'être traversé par un fluide, est porté, lors de son utilisation, à des températures plus élevées que la température de cokéfaction, on fait suivre la cokéfaction d'un traitement thermique dans lequel le corps moulé est porté, sous vide ou dans une atmosphère de gaz inerte, à une température qui correspond au moins à la température d'utilisation.